# EUROPÄISCHE PATENTSCHRIFT

(11) **EP 3 703 219 B1**
(45) Veröffentlichungstag und Bekanntmachung des Hinweises auf die Patenterteilung: **10.12.2025**
(21) Anmeldenummer: 20000056.0
(22) Anmeldetag: 07.02.2020
(51) Int. Cl.: H02J 7/00, G06F 1/26, G08G 1/052, H02J 13/00, G08G 1/01

(54) **ENERGIEVERSORGUNGSEINHEIT FÜR VERKEHRSÜBERWACHUNGSANLAGEN**
ENERGY SUPPLY UNIT FOR TRAFFIC MONITORING SYSTEMS
UNITÉ D'ALIMENTATION EN ÉNERGIE POUR LES SYSTÈMES DE SURVEILLANCE DU TRAFIC

(30) Priorität: 26.02.2019 DE 102019001367
(43) Veröffentlichungstag der Anmeldung: 02.09.2020
(73) Patentinhaber: VETRO Verkehrselektronik GmbH, 23966 Wismar (DE)
(72) Erfinder: Preker, Michael, 53347 Alfter (DE); Fabricius, Thomas, 53773 Hennef (DE)

(56) Entgegenhaltungen:
- CN-A- 101 833 864
- CN-Y- 2 700 980
- US-A1- 2011 096 167
- US-A1- 2011 291 565
- US-A1- 2014 210 399
- US-A1- 2015 303 527
- US-A1- 2017 279 170
- US-B1- 10 181 800

## Beschreibung

Die Erfindung betrifft eine Anordnung aus einer Energieversorgungseinheit und einer Verkehrsüberwachungsanlage sowie eine Verwendung einer Energieversorgungseinheit zur Versorgung einer Verkehrsüberwachungsanlage.

Verkehrsüberwachungsanlagen zur präventiven und verkehrssichernden Überwachung unterschiedlicher Verkehrsbereiche, zum Beispiel Land- und Bundesstraßen oder Autobahnen, sind in zahlreichen Ausgestaltungen bereits bekannt, zum Beispiel zur Überwachung von Rotlichtverstößen, Geschwindigkeitsverstößen, Abständen zwischen Fahrzeugen und dergleichen sowie Kombinationen hiervon. Derartige Verkehrsüberwachungsanlagen weisen eine ihrem jeweiligen Überwachungszweck entsprechende Sensorik auf, zum Beispiel nicht-invasive Sensorik wie Laser, Radar, Video usw. oder invasive Sensorik wie Piezo-, Schleifen-, Magnetfeldsensoren usw. Außerdem können derartige Verkehrsüberwachungsanlagen stationär, mobil oder semistationär (d. h. ortsveränderlich) ausgebildet sein.

Die von den Verkehrsüberwachungsanlagen durchgeführte Verkehrsüberwachung, das heißt insbesondere der eigentliche Messvorgang, ist grundsätzlich eine hoheitliche Aufgabe und unterliegt daher strengen rechtlichen Vorgaben. Hieraus resultiert eine erheblich eingeschränkte Einbindung Privater in die Verkehrsüberwachung, zum Beispiel zur Erbringung von Dienstleistungen im unmittelbaren Umfeld von Verkehrsüberwachungsanlagen, die beispielsweise Service- und Wartungsarbeiten an ebendiesen betreffen und eigentlich nichthoheitlichen Tätigkeiten zugeschrieben werden können.

Die von den Verkehrsüberwachungsanlagen zu sichernden Verkehrsbereiche sind nicht selten weit außerhalb jeglicher Bebauung zu finden. Häufig scheitern nachhaltige, technische Verkehrsüberwachungsmaßnahmen daran, dass die zwingend benötigte Energieversorgung nicht oder nur mit unverhältnismäßig hohem Aufwand (Genehmigungen, Kosten etc.) realisiert werden kann. Diese Problematik hat sich dadurch noch deutlich verschärft, dass die einstige analoge Messtechnik in den letzten Jahren durch volldigitalisierte Technologien, zum Beispiel digitale Kamerasysteme, digitale Steuereinheiten (prozessorgesteuerte Rechen- und Speichereinheiten) etc., ersetzt wurde. Seither stieg der Energiebedarf zur Versorgung von Verkehrsüberwachungsanlagen erheblich an. Daher wurden infolge des Technologiewandels unzählige Altanlagen außer Betrieb genommen und leisten seither keinen Beitrag für die Verkehrssicherheit mehr. Oftmals scheitert die Erneuerung an der Machbarkeit eines dauerhaften 230-Volt-Anschlusses und/oder an den fehlenden Finanzmitteln.

Eine batteriegestützte Ersatzversorgung für eine Verkehrsregelanlage im Falle eines Ausfalls einer Hauptstromversorgung ist aus US 2011/291565 A1 bekannt, wobei die batteriegestützte Energieversorgungseinheit innerhalb des Anlagengehäuses angeordnet ist.

Vor diesem Hintergrund liegt der vorliegenden Erfindung die Aufgabe zugrunde, eine verbesserte Anordnung aus einer Energieversorgungseinheit und einer Verkehrsüberwachungsanlage sowie eine Verwendung einer Energieversorgungseinheit zur Versorgung einer Verkehrsüberwachungsanlage zu schaffen, die die Durchführung von präventiven und verkehrssichernden Maßnahmen durch eine automatisierte, technische Verkehrsüberwachung im Vergleich zum Stand der Technik einfacher und kostengünstiger ermöglicht, so dass u. a. die in einem bestimmten Zeitraum realisierbare Anzahl und Dauer von Verkehrssicherungsmaßnahmen mit denselben oder sogar geringeren Finanzmitteln gesteigert und der Zeitaufwand zur Realisierung solcher Maßnahmen erheblich reduziert werden können. Zudem soll auch der Zeitaufwand zum Einrichten der verkehrssichernden Maßnahmen bzw. zum Aufbau der Verkehrssicherungsanlage, insbesondere in Verkehrsbereichen (z. B. Land- und Bundesstraßen, Autobahnen und dergleichen), die sich weit außerhalb jeglicher Bebauung befinden, sowie der Zeitaufwand bei Wartungs- und Serviceeinsätzen wesentlich reduziert werden. Weiterhin soll ein ununterbrochener Messbetrieb während der Verkehrssicherungsmaßnahme innerhalb eines vorherbestimmten Zeitraums, beispielsweise wenigstens mehrere Tage, sichergestellt werden.

Diese Aufgabe wird durch eine Anordnung mit den Merkmalen des Anspruchs 1 sowie durch eine Verwendung mit den Merkmalen des Anspruchs 12 gelöst.

Weitere besonders vorteilhafte Ausgestaltungen der Erfindung offenbaren die jeweiligen Unteransprüche.

Es ist darauf hinzuweisen, dass die in der nachfolgenden Beschreibung einzeln aufgeführten Merkmale in beliebiger, technisch sinnvoller Weise miteinander kombiniert werden können und weitere Ausgestaltungen der Erfindung aufzeigen. Die Beschreibung charakterisiert und spezifiziert die Erfindung insbesondere im Zusammenhang mit den Figuren zusätzlich.

Ferner sei angemerkt, dass eine hierin nachstehend verwendete, zwischen zwei Merkmalen stehende und diese miteinander verknüpfende Konjunktion "und/oder" stets so auszulegen ist, dass in einer ersten Ausgestaltung des erfindungsgemäßen Gegenstands lediglich das erste Merkmal vorhanden sein kann, in einer zweiten Ausgestaltung lediglich das zweite Merkmal vorhanden sein kann und in einer dritten Ausgestaltung sowohl das erste als auch das zweite Merkmal vorhanden sein können.

Erfindungsgemäß wird eine Anordnung aus einer mobilen Energieversorgungseinheit und einer in einem Anlagengehäuse aufgenommenen Verkehrsüberwachungsanlage offenbart. Wobei die Energieversorgungseinheit ein Gehäuse, wenigstens eine in dem Gehäuse aufgenommene Energiespeicherbank mit zumindest einem elektrischen Energiespeicher zur Bereitstellung elektrischer Energie und wenigstens einen aus dem Gehäuse herausgeführten elektrischen Ausgangsanschluss aufweist, wobei der Ausgangsanschluss gehäuseinnenseitig mit der wenigstens einen Energiespeicherbank zur Bereitstellung der elektrischen Energie elektrisch verbindbar ist und an den gehäuseaußenseitig die Verkehrsüberwachungsanlage zu ihrer elektrischen Energieversorgung elektrisch anschließbar ist, wobei die Verkehrsüberwachungsanlage mit dem wenigstens einen Ausgangsanschluss der Energieversorgungseinheit elektrisch verbunden ist, wobei die Energieversorgungseinheit wenigstens eine elektronische Messeinrichtung mit zumindest einem Spannungssensor und/ oder zumindest einem Stromsensor und/oder zumindest einem Temperatursensor zur Erfassung einer entsprechenden Messgröße der wenigstens einen Energiespeicherbank und/oder des wenigstens einen Energiespeichers und/oder des wenigstens einen Ausgangsanschlusses und/ oder des Gehäuses aufweist, wobei die Energieversorgungseinheit weiterhin wenigstens eine elektrische Schalteinrichtung zum elektrischen Verbinden und Trennen der wenigstens einen Energiespeicherbank mit bzw. von dem wenigstens einen Ausgangsanschluss und wenigstens eine mit der Messeinrichtung und der Schalteinrichtung jeweils elektrisch verbundene elektronische Steuereinheit aufweist, die eingerichtet ist, die von der wenigstens einen Messeinrichtung erfasste/n Messgröße/n zu überwachen und die Schalteinrichtung in Abhängigkeit von der/ den durch die wenigstens eine Messeinrichtung erfassten Messgröße/n zu steuern, wobei die Energieversorgungseinheit eingerichtet ist, die Verkehrsüberwachungsanlage für einen innerhalb eines vorherbestimmten Zeitraums ununterbrochenen Messbetrieb mit elektrischer Energie zu versorgen, wobei wenigstens eine weitere Energiespeicherbank mit zumindest einem weiteren elektrischen Energiespeicher zur Bereitstellung elektrischer Energie in dem Gehäuse aufgenommen ist und die mehreren Energiespeicherbänke einzeln auswechselbar in dem Gehäuse aufgenommen sind und/oder mehrere Energiespeicher aufweisen, die einzeln auswechselbar in der jeweiligen Energiespeicherbank aufgenommen sind, wobei die mehreren Energiespeicherbänke derart elektrisch verschaltet sind, dass eine am Ausgangsanschluss bereitgestellte elektrische Gesamtenergie aus der Summe von Teilenergiebeiträgen jeder einzelnen Energiespeicherbank zusammengesetzt ist, so dass die Bereitstellung elektrischer Energie am elektrischen Ausgangsanschluss für den Messbetrieb der am Ausgangsanschluss angeschlossenen Verkehrsüberwachungsanlage bei einem Wechsel einer der mehreren Energiespeicherbänke beziehungsweise des wenigstens einen Energiespeichers der jeweiligen Energiespeicherbank ununterbrochen erfolgt, wobei das Gehäuse außerhalb des und räumlich getrennt von dem Anlagengehäuse angeordnet ist.

Als mobil ist die Energieversorgungseinheit im Sinne der vorliegenden Erfindung insbesondere dann zu verstehen, wenn sie in ihrem im Wesentlichen vollständig aufgebauten Zustand an einen beliebigen Standort verbracht werden kann. Zusätzlich weist die mobile Energieversorgungseinheit im Sinne der Erfindung an dem jeweiligen Aufstellort im Gegensatz zu einer stationären Aufstellung keine dauerhafte Verankerung oder Befestigung am bzw. mit dem Untergrund auf. Zumindest lässt sich die mobile Energieversorgungseinheit ohne großen Aufwand prinzipiell beliebig oft von einem Standort entfernen und zu einem anderen Standort verbringen.

Damit ist die Durchführung verkehrssichernder Maßnahmen mit Hilfe einer Verkehrsüberwachungsanlage mit Hilfe der mobilen Energieversorgungseinheit besonders einfach, kostengünstig und in kürzester Zeit realisierbar, da nunmehr keine zusätzlichen, besonderen Vorkehrungen am jeweiligen Standort der Verkehrsüberwachungsanlage bezüglich ihrer zwingend benötigten elektrischen Energieversorgung getroffen werden müssen. Damit sind derartige Verkehrssicherungsmaßnahmen selbst an Standorten, zum Beispiel Land- und Bundesstraßen, Autobahnen etc., möglich, die weit außerhalb jeglicher Bebauung zu finden sind. Die elektrisch zu speisende Verkehrsüberwachungsanlage kann stationär, semistationär (d. h. ortsveränderlich) oder auch selbst mobil sein. Im Vergleich zum Stand der Technik ermöglicht die vorliegende Erfindung in besonders vorteilhafter Weise u. a. eine deutlich höhere Anzahl an realisierbaren Verkehrssicherungsmaßnahmen je Zeiteinheit bei Verwendung derselben oder sogar geringerer Finanzmittel.

Erfindungsgemäß ist das Gehäuse der mobilen Energieversorgungseinheit außerhalb des und räumlich getrennt von dem Anlagengehäuse der Verkehrsüberwachungsanlage angeordnet. Die Verkehrsüberwachungsanlage ist mit dem wenigstens einen Ausgangsanschluss der Energieversorgungseinheit elektrisch verbunden. Die mobile Energieversorgungseinheit ist eingerichtet, die Verkehrsüberwachungsanlage für einen innerhalb eines vorherbestimmten Zeitraums ununterbrochenen Messbetrieb mit elektrischer Energie zu versorgen. Der vorherbestimmte Zeitraum beträgt bevorzugt mehrere Tage, zum Beispiel wenigstens 7 Tage. Die Verkehrsüberwachungsanlage ist eingerichtet, den fließenden und/oder ruhenden Verkehr zu überwachen, insbesondere Verkehrsverstöße zu erfassen und zu dokumentieren, zum Beispiel Rotlicht-, Geschwindigkeits-, Abstandsverstöße und dergleichen oder beliebige Kombinationen hiervon. Die Verkehrsüberwachungsanlage kann selbst mobil, semistationär (d. h. ortsveränderlich) oder stationär sein. Sie kann mit nicht invasiver Sensorik wie z. B. Laser, Radar, Video usw. und/oder mit invasiver Sensorik wie Piezo-, Schleifen-, Magnetfeldsensoren usw. ausgestattet sein. Die zur Verkehrsüberwachung und/oder Dokumentierung von Verkehrsverstößen erforderliche Informationsspeicherung findet ausschließlich in der Verkehrsüberwachungsanlage, das heißt innerhalb des Anlagengehäuses, statt (Gewährleistung des Datenschutzes).

Ein weiterhin besonderer Vorteil der Erfindung ist darin zu sehen, dass die mobile Energieversorgungseinheit von der Verkehrsüberwachungsanlage, die sie für den eigentlichen Messbetrieb mit elektrischer Energie versorgt, räumlich vollständig getrennt angeordnet ist. Hierdurch wird eine klare Trennung zwischen dem eine hoheitliche Aufgabe darstellenden Messvorgang der Verkehrsüberwachungsanlage und der mobilen Energieversorgungseinheit erreicht, deren Energiebereitstellung keinen hoheitlichen Beschränkungen unterliegt. Die mobile Energieversorgungseinheit eröffnet somit erstmals die rechtmäßige Einbeziehung privater Dienstleister bei der Durchführung von Verkehrssicherungsmaßnahmen. Dienstleistungen wie etwa Wartungs- und Servicetätigkeit, zum Beispiel zur Sicherstellung einer für eine geplante Gesamtzeitdauer des Messbetriebs der Verkehrsüberwachungsanlage elektrischen Energieversorgung, können nun von einem privaten Dienstleister erbracht werden, da hierzu kein Eingriff in den hoheitlich geschützten Bereich der Verkehrsüberwachungsanlage mehr erforderlich ist. Auf eine ansonsten vorgeschriebene persönliche Begleitung eines privaten Dienstleisters durch einen amtlichen Zeugen (z. B. Verwaltungsperson) kann damit verzichtet werden, wodurch sich Personalressourcen sowie der Zeit- und Planungsaufwand für derartige Service- bzw. Wartungseinsätze, die nunmehr vom privaten Dienstleister selbständig und unabhängig geplant und durchgeführt werden können, erheblich reduzieren lassen.

Gleichzeitig werden durch die erfindungsgemäß bewirkte eindeutige (räumliche) Trennung zwischen der mobilen Energieversorgungseinheit und der Verkehrsüberwachungsanlage darüber hinausgehend auch sämtliche datenschutzrechtlichen Anforderungen (DS-GVO) eingehalten, da bei den Wartungs- und Servicetätigkeiten an der mobilen Energieversorgungseinheit kein Zugriff auf die Verkehrsüberwachungsanlage stattfindet.

Die an der mobilen Energieversorgungseinheit durchführbaren Wartungs- und Servicetätigkeiten zur Aufrechterhaltung und Sicherstellung der elektrischen Energieversorgung während des gesamten vorgesehenen Messbetriebs verhindert zudem ein unkontrolliertes Abschalten der Verkehrsüberwachungsanlage. Ein dauerhafter, ununterbrochener Messbetrieb, der vorzugsweise mehrere Tage umfassen kann, zum Beispiel wenigstens sieben Tage, kann mit der mobilen Energieversorgungseinheit auf einfache Weise gewährleistet werden.

Da eine dauerhafte und ausreichende elektrische Energieversorgung der gespeisten Verkehrsüberwachungsanlage wie vorbeschrieben sichergestellt werden kann, eignet sich die mobile Energieversorgungseinheit insbesondere auch zur elektrischen Versorgung von digitalen Verkehrsüberwachungsanlagen, die für den Betrieb von zum Beispiel digitalen Kamerasystemen, digitalen Steuereinheiten (z. B. prozessorgesteuerte Rechen- und Speichereinheiten), digitaler Messtechnik und dergleichen einen vergleichsweise hohen Energiebedarf aufweisen.

Neben den bereits weiter oben erwähnten Messsensoren zur Erfassung einer elektrischen Spannung, eines Stroms oder einer Temperatur, können in einer nicht beanspruchten Ausführungsform auch noch weitere Sensoren vorgesehen sein, zum Beispiel Rauch- und/oder Schocksensoren, Türkontaktsensoren und dergleichen, die im Wesentlichen der Überwachung des Gehäuses der mobilen Energieversorgungseinheit dienen.

Derartige Überwachungssensoren können ebenfalls mit der elektronischen Steuereinheit in der oben beschriebenen Weise verbunden sein. Die Betriebssteuerung durch die elektronische Steuereinheit kann dann ebenfalls in Abhängigkeit den durch diese Sensoren erfassten Messgrößen erfolgen.

Als Spannungs- und/oder Strom- und/oder Temperatursensoren können zum Beispiel auch entsprechende Messsensoren einer ohnehin in einer möglichen nicht beanspruchten Ausführungsform der mobilen Energieversorgungseinheit vorgesehenen Balancer-Vorrichtung zur gleichmäßigen elektrischen Ladungsverteilung beim Laden wiederaufladbarer Energiespeicher, zum Beispiel Lithium-Ionen-Akkus, verwendet werden. Auf das Vorsehen zusätzlicher Messsensoren kann dann vorteilhaft verzichtet werden.

Gemäß der Erfindung ist in dem Gehäuse der mobilen Energieversorgungseinheit wenigstens eine weitere Energiespeicherbank mit zumindest einem weiteren elektrischen Energiespeicher zur Bereitstellung elektrischer Energie aufgenommen. Das heißt, die mobile Energieversorgungseinheit weist wenigstens zwei Energiespeicherbänke auf, wobei die eingangs beschriebene (erste) Energiespeicherbank hierin auch als erste Energiespeicherbank bezeichnet wird und die vorstehende weitere Energiespeicherbank der vorliegenden Ausführungsform als zweite Energiespeicherbank bezeichnet wird. Die mehreren Energiespeicherbänke, das heißt die wenigstens eine erste Energiespeicherbank und die wenigstens eine zweite Energiespeicherbank, sind derart elektrisch verschaltet, dass eine am Ausgangsanschluss bereitgestellte elektrische Gesamtenergie aus der Summe von Teilenergiebeiträgen jeder einzelnen Energiespeicherbank zusammengesetzt ist. Mit anderen Worten wird der am wenigstens einen Ausgangsanschluss entnommene Laststrom zur Versorgung einer am Ausgangsanschluss elektrisch angeschlossenen Verkehrsüberwachungsanlage unter den installierten ersten und zweiten Energiespeicherbänken aufgeteilt. Einerseits ermöglicht dies einen dauerhaften Messbetrieb über einen längeren Zeitraum, andererseits kann so ebenfalls ein unterbrechungsfreier Messbetrieb der Verkehrsüberwachungsanlage selbst bei einem Wechsel einer der mehreren Energiespeicherbänke bzw. einem oder mehreren der dieser Energiespeicherbank zugeordneten einzelnen Energiespeicher sichergestellt werden. Für den Zeitraum des Wechsels übernimmt die verbleibende Energiespeicherbank die elektrische Versorgung der angeschlossenen Verkehrsüberwachungsanlage.

Auch ein Ausfall oder eine gezielte Abschaltung/Trennung (beispielsweise wegen einer drohenden Überhitzung) einer Energiespeicherbank bzw. einzelner dieser zugeordneter Energiespeicher führt nicht zu einer unkontrollierten Abschaltung der Verkehrsüberwachungsanlage. Ihr Messbetrieb kann zumindest noch für eine gewisse Zeitdauer alleine durch die aktive Energiespeicherbank sichergestellt werden. Während dieser Zeitdauer kann die ausgefallene Energiespeicherbank bzw. einzelne dieser zugeordnete Energiespeicher ersetzt werden oder die vom Ausgangsanschluss zum Beispiel wegen einer kritischen Betriebstemperatur temporär getrennte Energiespeicherbank wieder zugeschaltet werden, sobald die bestimmungsgemäßen Betriebsbedingungen wieder erreicht sind.

Nach der Erfindung sind die mehreren Energiespeicherbänke einzeln auswechselbar in dem Gehäuse aufgenommen, beispielsweise durch die Verwendung einer entsprechenden Einschubtechnik mit im Gehäuse vorgesehenen Führungsschienen. Somit wird ein modularer Aufbau der die elektrische Energie bereitstellenden Energiespeicherbänke erzielt, der einen einfachen und schnellen Austausch im Rahmen einer Wartungs- bzw. Servicetätigkeit gewährleistet und zusätzlich ebenfalls eine den jeweiligen konkreten Betriebsanforderungen angepasste Skalierung der mobilen Energieversorgungseinheit ermöglicht. Zusätzlich oder alternativ hierzu weist die (erste, zweite und/oder dritte) Energiespeicherbank mehrere Energiespeicher auf, die einzeln auswechselbar in der Energiespeicherbank aufgenommen sind. Bei dieser Ausführung können einzelne Energiespeicher einer Energiespeicherbank ausgetauscht werden, ohne dass ein Austausch der gesamten Energiespeicherbank erforderlich ist. Dies ist vorteilhaft, wenn lediglich ein einzelner Energiespeicher der Energiespeicherbank einen Defekt oder eine unzureichende elektrische Leistungsabgabe aufweist. Bevorzugt sind die einzelnen Energiespeicher mittels einer entsprechenden Einschubtechnik und Führungsschienen in der Energiespeicherbank aufgenommen. Somit wird ein modularer Aufbau der die elektrische Energie bereitstellenden Energiespeicher erzielt, der einen einfachen und schnellen Austausch im Rahmen von Wartungs- bzw. Servicetätigkeiten gewährleistet und zusätzlich eine den jeweiligen konkreten Betriebsanforderungen angepasste Skalierung der mobilen Energieversorgungseinheit ermöglicht.

Die einzelnen zu einer Energiespeicherbank zusammengeschalteten Energiespeicher können in einer elektrischen Reihenschaltung und/oder Parallelschaltung miteinander verschaltet sein, je nach bereitzustellender elektrischer Leistung.

Eine vorteilhafte Ausgestaltung der Erfindung sieht vor, dass wenigstens eine weitere Energiespeicherbank mit zumindest einem weiteren elektrischen Energiespeicher zur Bereitstellung elektrischer Energie in dem Gehäuse aufgenommen ist, wobei die mehreren Energiespeicherbänke derart elektrisch verschaltet sind, dass die weitere Energiespeicherbank lediglich zur Abdeckung kurzzeitiger Spitzenlasten am wenigstens einen Ausgangsanschluss elektrische Energie bereitstellt.

In der vorliegenden Ausführungsform stellt die weitere Energiespeicherbank eine hierin auch als dritte Energiespeicherbank bezeichnete zusätzliche Energiespeicherbank dar, die lediglich zur Abdeckung von Spitzenlasten, beispielsweise infolge des Auslösens einer oder mehrerer in der angeschlossenen Verkehrsüberwachungsanlage vorgesehener Kamerablitzgeräte, temporär von der Steuereinheit zur am Ausgangsanschluss bereitgestellten elektrischen Energieversorgung zugeschaltet werden kann. Zum Beispiel kann eine typische Dauerlast am Ausgangsanschluss bei Versorgung einer (digitalen) Verkehrsüberwachungsanlage die dauerhafte Bereitstellung eines elektrischen Stroms von etwa 12 A erfordern, bei Auslösen eines oder mehrerer Kamerablitzgeräte der Verkehrsüberwachungsanlage kann dies jedoch kurzfristig, beispielsweise für eine Zeitdauer im Bereich von etwa 1 s, die Bereitstellung eines Spitzenstroms von etwa 60 A erfordern. Erkennt die elektronische Steuereinheit zum Beispiel mittels einer der oben beschriebenen Messeinrichtungen bzw. Messsensoren einen sehr schnellen/steilen Anstieg des dem Ausgangsanschluss entnommenen elektrischen Stroms, kann die wenigstens eine dritte Energiespeicherbank von der Steuereinheit zur Pufferung der Spitzenlast temporär zugeschaltet werden und so die den Dauerbetrieb gewährleistende erste Energiespeicherbank bzw. erste und zweite Energiespeicherbänke entlasten. Auch beim Einschalten der Verkehrsüberwachungsanlage kann die Bereitstellung eines hohen Einschaltstroms erforderlich sein, der beispielsweise ebenfalls zumindest teilweise durch die dritte Energiespeicherbank bereitgestellt wird.

Zur begrifflichen Unterscheidung der *weiteren* Energiespeicherbank zur Pufferung von Spitzenlasten von der weiter oben bereits beschriebenen wenigstens einen *zweiten* Energiespeicherbank wird erstere hierin auch als *dritte* Energiespeicherbank bezeichnet. Es ist daher zu verstehen, dass die oben erwähnte erste Energiespeicherbank sowohl in Kombination mit der wenigstens einen zweiten und der wenigstens einen dritten Energiespeicherbank verwendet werden kann oder auch in einer Kombination, die lediglich die wenigstens eine erste und die wenigstens eine dritte Energiespeicherbank aufweist. Die Ordinalzahlen "erste/r", "zweite/r" und "dritte/r" kennzeichnen im Sinne der beiden vorstehend beschriebenen Ausführungsformen der mobilen Energiespeichereinheit daher keine bestimmte Anzahl an Energiespeicherbänken, sondern vielmehr einen bestimmten Typus einer bzw. mehrerer Energiespeicherbänke, wie er vorstehend definiert wurde.

Bei einer anderen bevorzugten Weiterbildung der Erfindung weisen die mehreren Energiespeicherbänke dieselbe Anzahl elektrischer Energiespeicher auf. Dies vereinfacht den Aufbau der mobilen Energiespeichereinheit insbesondere in solchen Anwendungsfällen, in denen lediglich eine bestimmte elektrische Spannung, zum Beispiel lediglich 12 V oder 24 V oder 48 V Gleichspannung, am Ausgangsanschluss zur Versorgung der angeschossenen Verkehrsüberwachungsanlage bereitzustellen sind, da dann auf eine elektrische Wandlung der von einer Energiespeicherbank bereitgestellten elektrischen Spannung auf ein anderes Spannungsniveau verzichtet werden kann.

Es können jedoch auch Energiespeicherbänke mit einer unterschiedlichen Anzahl an Energiespeichern eingesetzt werden, so dass die Energiespeicherbänke auch unterschiedliche elektrische Ausgangsspannungen aufweisen können. Diese können dann beispielsweise mittels eines Wandlers auf ein gewünschtes gemeinsames Spannungsniveau gewandelt werden. Die Energiespeicherbänke mit jeweils unterschiedlichen Ausgangsspannungen können jedoch auch ohne Spannungswandlung direkt verwendet werden, um unterschiedliche Ausgangsspannungen an unterschiedlichen Ausgangsanschlüssen der mobilen Energieversorgungseinheit bereitzustellen.

Nach einer noch weiteren vorteilhaften Ausgestaltung der Erfindung ist ein Wechselrichter elektrisch zwischen die wenigstens eine (erste, zweite, dritte) Energiespeicherbank und den wenigstens einen Ausgangsanschluss geschaltet. Der Wechselrichter wandelt eine von der jeweiligen Energiespeicherbank bereitgestellte elektrische Gleichspannung in eine am Ausgangsanschluss bereitgestellte elektrische Wechselspannung um. Beispielsweise kann so eine durch die Energiespeicherbank an sich bereitgestellte Ausgangsgleichspannung von 12 V in eine am Ausgangsanschluss bereitzustellende Ausgangswechselspannung von 110 V oder 230 V gewandelt werden.

Alternativ oder zusätzlich zu einem Wechselrichter kann die mobile Energieversorgungseinheit in einer nicht beanspruchten Ausführungsform auch einen oder mehrere Gleichspannungswandler aufweisen, die eine durch eine Energiespeicherbank an sich bereitgestellte Ausgangsgleichspannung, zum Beispiel 12 V, auf ein anderes, insbesondere höheres, Spannungsniveau, zum Beispiel 24 V oder 48 V oder höher, wandelt. So können beispielsweise in einer mehrere Meter, zum Beispiel 50 m oder 100 m oder mehrere 100 m, langen elektrischen Anschlussleitung zwischen der mobilen Energieversorgungseinheit und der zu speisenden Verkehrsüberwachungsanlage verursachte ohmsche Verluste reduziert werden.

Weiterhin bevorzugt kann die mobile Energieversorgungseinheit nach einer anderen vorteilhaften Ausgestaltung der Erfindung auch wenigstens einen aus dem Gehäuse herausgeführten elektrischen Eingangsanschluss aufweisen. An diesen ist eine gehäuseexterne elektrische Energiequelle anschließbar. Gehäuseinnenseitig ist der Eingangsanschluss mit der wenigstens einen Energiespeicherbank elektrisch verbindbar, beispielsweise mittels der von der elektronischen Steuereinheit gesteuerten Schalteinrichtung, um den wenigstens einen elektrischen Energiespeicher der wenigstens einen Energiespeicherbank elektrisch zu laden. Die externe Energiequelle kann eine am Aufstellort der mobilen Energieversorgungseinheit vorhandene Stromversorgung, zum Beispiel ein dauerhaft bereitgestellter Netzstrom/Baustrom oder eine zeitgesteuerte Stromversorgung zum Beispiel einer Straßenbeleuchtung sein. Alternativ oder zusätzlich ist auch die Bereitstellung der externen elektrischen Energie am Eingangsanschluss durch die Verwendung einer Photovoltaik-Anlage an oder in unmittelbarer Näher der mobilen Energieversorgungseinheit möglich. So können zum Beispiel Solarmodule außenseitig am Gehäuse der mobilen Energieversorgungseinheit angebracht sein. Die Verwendung anderer Vorrichtungen zur Nutzbarmachung regenerativer Energien, zum Beispiel Windkraft, ist gleichfalls möglich. Es ist zu verstehen, dass gegebenenfalls eine elektrische Spannungswandlervorrichtung, zum Beispiel Gleich- und/oder Wechselrichter, zwischen den Eingangsanschluss und der zu ladenden Energiespeicherbank geschaltet sein kann, um eine für das elektrische Laden der Energiespeicherbank bzw. der zugeordneten Energiespeicher geeignete Spannungsanpassung der am Eingangsanschluss eingespeisten elektrischen Spannung zu erreichen. Bevorzugt wird die elektronische Steuereinheit verwendet, den Ladevorgang zu steuern.

Eine weitere vorteilhafte Ausgestaltung der Erfindung sieht vor, dass am Gehäuse außenseitig wenigstens eine Transportvorrichtung zum Transportieren des Gehäuses vorgesehen ist. Die Transportvorrichtung kann beispielsweise einen oder mehrere am Gehäuse angebrachte Transporthaken oder Transportösen sein. Diese können vom Gehäuse abnehmbar ausgebildet sein. Die Transportvorrichtung ermöglicht nach dem Zusammenbau der mobilen Energieversorgungseinheit einen einfachen und schnellen Transport zum jeweils vorgesehenen Aufstellstandort.

Am Einsatzort kann die mobile Energieversorgungseinheit entsprechend einer nicht beanspruchten Ausführungsform auf einem gegossenen Fundament, einem Fertigfundament (z. B. Betonplatte) oder einem Rammfundament sicher abgestellt sein. Die Verwendung von Fertig- oder Rammfundamenten ermöglicht zudem einen problemlosen und schnellen Rückbau. Auf diese Weise lassen sich auch Verkehrssicherungsmaßnahmen mit stationären Verkehrsüberwachungsanlagen realisieren, die nur eine verhältnismäßig kurzer Einsatzdauer aufweisen.

Entsprechend einer nicht beanspruchten Ausführungsform kann die mobile Energieversorgungseinheit am Aufstellort zum Beispiel mittels Verbindungsmitteln zur Herstellung einer bevorzugt formschlüssigen Verbindung mit dem Untergrund, zum Beispiel dem Fundament, auf dem die Versorgungseinheit abgestellt ist, befestigt sein. Besonders bevorzugt können hierzu Schraubverbindungen verwendet werden.

Besonders bevorzugt ist das Gehäuse der mobilen Energieversorgungseinheit im Wesentlichen quaderförmig ausgebildet und weist an zwei Seiten des Gehäuses jeweils eine Tür, zum Beispiel eine Doppelflügeltür, auf. Bevorzugt sind die Türen an zwei diametral gegenüberliegenden Seiten des Gehäuses angeordnet. Dies ermöglicht einen optimalen Zugang zu allen im Gehäuse zu verbauenden bzw. verbauten Komponenten der mobilen Energieversorgungseinheit, was Wartungs- und Servicetätigkeiten im laufenden Betrieb deutlich vereinfacht.

Gemäß einer noch weiteren vorteilhaften Ausgestaltung der Erfindung kann eine Datenübertragungseinrichtung vorgesehen sein, die in datenübertragender Weise mit der elektronischen Steuereinheit verbunden und eingerichtet ist, Daten zwischen der Steuereinheit und einer gehäuseexternen Datenverarbeitungsanlage zu übertragen. Die Datenübertragung zwischen der externen Datenverarbeitungsanlage und der Datenübertragungseinrichtung kann drahtgebunden, zum Beispiel mittels LAN-, WAN- oder Telefonkabel, oder drahtlos, zum Beispiel mittels GSM, LTE, WLAN, Bluetooth und dergleichen, erfolgen. Die Datenübertragungseinrichtung ermöglicht ein vom Aufstellort der mobilen Energieversorgungseinheit entferntes Monitoring aller für einen störungsfreien, dauerhaften Betrieb relevanten Parameter, zum Beispiel Spannung, Strom, Temperatur etc. Hierdurch ist insbesondere eine Optimierung von Serviceeinsätzen, beispielsweise zum Austausch der Energiespeicherbank oder einzelner Energiespeicher, sowie eine Überwachung besonders relevanter Betriebsparameter und/oder die Übertragung beispielsweise von der elektronischen Steuereinheit automatisch generierter Alarmmeldungen von der mobilen Energieversorgungseinheit an die externe Datenverarbeitungsanlage beim Erreichen kritischer Betriebszustände möglich.

Die wenigstens eine Energiespeicherbank ist vorzugsweise derart ausgelegt, eine am wenigstens einen Ausgangsanschluss anschließbare Verkehrsüberwachungsanlage, z. B. digitale Verkehrsüberwachungsanlage, für einen ununterbrochenen Messbetrieb in einem vorherbestimmten Zeitraum, beispielsweise mindestens 7 Tage, mit elektrischer Energie zu versorgen. Der die Energiespeicherbank bildende elektrische Energiespeicher ist bevorzugt ein Lithium-Ionen-Akkumulator, insbesondere ein LiFePO₄-Akku (Lithium-Eisenphosphat-Akkumulator).

Besonders bevorzugt ist die Verkehrsüberwachungsanlage eine digitale Verkehrsüberwachungsanlage, das heißt sie weist im Wesentlichen eine volldigitalisierte Mess- und Steuertechnik auf, zum Beispiel digitale Kamerasysteme, digitale Steuereinheiten (z. B. prozessorgesteuerte Rechen- und Speichereinheiten), digitale Messtechnik und dergleichen.

Weitere Merkmale und Vorteile der Erfindung ergeben sich aus der folgenden Beschreibung eines nicht einschränkend zu verstehenden Ausführungsbeispiels der Erfindung, die im Folgenden unter Bezugnahme auf die Zeichnung näher erläutert wird. In dieser Zeichnung zeigen schematisch:
- Fig. 1: ein Ausführungsbeispiel einer Anordnung einer mobilen Energieversorgungseinheit und einer Verkehrsüberwachungsanlage gemäß der Erfindung,
- Fig. 2: eine perspektivische Ansicht eines Gehäuses der mobilen Energieversorgungseinheit aus Fig. 1,
- Fig. 3: eine Vorderansicht des Gehäuses der mobilen Energieversorgungseinheit aus Fig. 1,
- Fig. 4: eine Seitenansicht des Gehäuses der mobilen Energieversorgungseinheit aus Fig. 1 und
- Fig. 5: eine perspektivische Ansicht des Innenraums des Gehäuses aus Fig. 2 mit darin aufgenommenen Komponenten der mobilen Energieversorgungseinheit aus Fig. 1.

In den unterschiedlichen Figuren sind hinsichtlich ihrer Funktion gleichwertige Teile stets mit denselben Bezugszeichen versehen, so dass diese in der Regel auch nur einmal beschrieben werden.

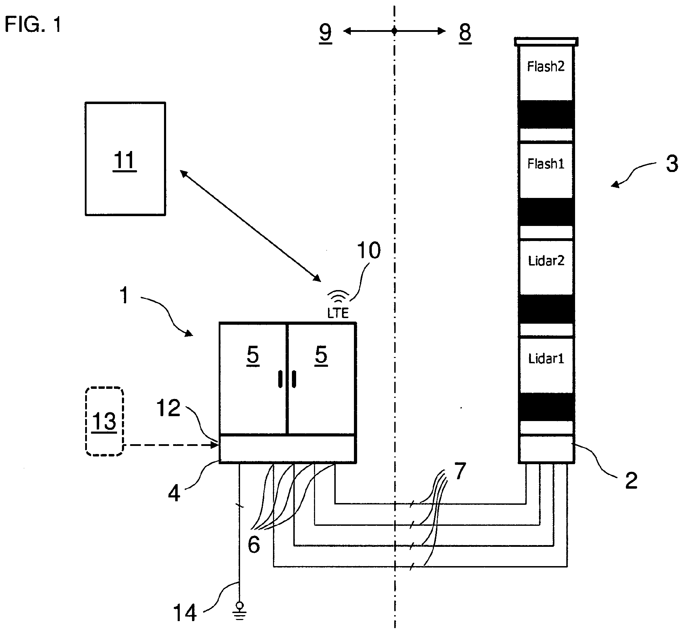

Fig. 1 stellt schematisch ein Ausführungsbeispiel einer Anordnung gemäß der Erfindung aus einer mobilen Energieversorgungseinheit 1 gemäß der Erfindung und einer in einem Anlagengehäuse 2 aufgenommenen Verkehrsüberwachungsanlage 3, vorliegend eine digitale Verkehrsüberwachungsanlage 3 mit zwei digitalen Kamera- und Blitzvorrichtungen Flash1, Flash2 sowie zwei optischen Abstands- und Geschwindigkeitsmesssensoren Lidar1, Lidar2, dar. Die Energieversorgungseinheit 1 weist ein im Wesentlichen quaderförmiges Gehäuse 4 auf. An zwei gegenüberliegenden Seiten des Gehäuses 4, von denen in Fig. 1 lediglich die Vorderseite zu sehen ist, sind jeweils eine Doppelflügeltür 5 angebracht.

Des Weiteren ist in Fig. 1 zu erkennen, dass die dargestellte Energieversorgungseinheit 1 mehrere aus dem Gehäuse 4 herausgeführte elektrische Ausgangsanschlüsse 6, vorliegend vier Ausgangsanschlüsse 6, aufweist, an die die Verkehrsüberwachungsanlage 3 über entsprechende elektrische Anschlussleitungen 7 elektrisch angeschlossen ist. Das Vorsehen von vier Ausgangsanschlüssen 6 ist jedoch nicht zwingend erforderlich. Es kann auch lediglich ein einziger Ausgangsanschluss 6 aus dem Gehäuse 4 herausgeführt sein. Die Ausgangsanschlüsse 6 stellen die elektrische Energieversorgung der Verkehrsüberwachungsanlage 3 sicher. Hierbei können an den unterschiedlichen Ausgangsanschlüssen 6 der dargestellten Energieversorgungseinheit 1 jeweils unterschiedliche Versorgungsspannungen, zum Beispiel 12 V, 24 V und/oder 48 V, bereitgestellt sein. Alle dargestellten Ausgangsanschlüsse 6 können jedoch auch dieselbe Speisespannung bereitstellen.

Wie deutlich in Fig. 1 zu erkennen ist, ist das Gehäuse 4 der Energieversorgungseinheit 1 außerhalb des und räumlich getrennt von dem Anlagengehäuse 2 der Verkehrsüberwachungsanlage 3 angeordnet. Die Verkehrsüberwachungsanlage 3 ist lediglich über die elektrischen Verbindungsleitungen 7 mit den Ausgangsanschlüssen 6 der Energieversorgungseinheit 1 elektrisch verbunden. Die räumliche Trennung der Energieversorgungseinheit 1 von der Verkehrsüberwachungsanlage 3 ist in Fig. 1 mittels einer strichpunktierten Trennlinie noch einmal verdeutlicht, wobei auf der rechten Seite der Trennlinie in Fig. 1 der hoheitliche Bereich 8 der Anordnung und auf der linken Seite der Trennlinie in Fig. 1 der nichthoheitliche Bereich 9 der gesamten Anordnung zu erkennen ist.

Weiterhin weist die in Fig. 1 dargestellte beispielhafte Energieversorgungseinheit 1 eine Datenübertragungseinrichtung 10 auf, vorliegend eine eine drahtlose Übertragung (LTE) nutzende Datenübertragungseinrichtung. Die Datenübertragungseinrichtung 10 ermöglicht eine Datenübertragung zwischen der Energieversorgungseinheit 1 und einer gehäuseexternen Datenverarbeitungsanlage 11, zum Beispiel einer entfernt aufgestellten bzw. angeordneten Computeranlage.

Fig. 1 stellt außerdem als optionales, zusätzliches Merkmal der mobilen Energieversorgungseinheit 1 einen aus dem Gehäuse 4 herausgeführten elektrischen Eingangsanschluss 12 dar. Dieser ist jedoch nicht zwingend erforderlich. An den Eingangsanschluss 12 ist vorliegend eine gehäuseexterne elektrische Energiequelle 13, die in Fig. 1 lediglich symbolisch gezeigt ist, elektrisch anschließbar. Die externe Energiequelle 13 kann eine am Aufstellort der mobilen Energieversorgungseinheit 1 bereitgestellte Stromversorgung, zum Beispiel Netzstrom, Baustrom oder eine zeitgesteuerte Stromversorgung beispielsweise von einer Straßenbeleuchtung (nicht dargestellt), sein. Die externe Energiequelle 13 kann alternativ oder zusätzlich auch regenerativ erzeugte Energie, zum Beispiel Solar- oder Windkraftenergie, sein. Die regenerative elektrische Energie kann vorzugsweise in unmittelbarer Näher der Energieversorgungseinheit 1 erzeugt werden, beispielsweise durch Anbringen von Solarmodulen oder eines Windrads an der Außenseite des Gehäuses 4.

Die in Fig. 1 gezeigte Energieversorgungseinheit 1 weist außerdem noch einen Erdungsanschluss 14 auf.

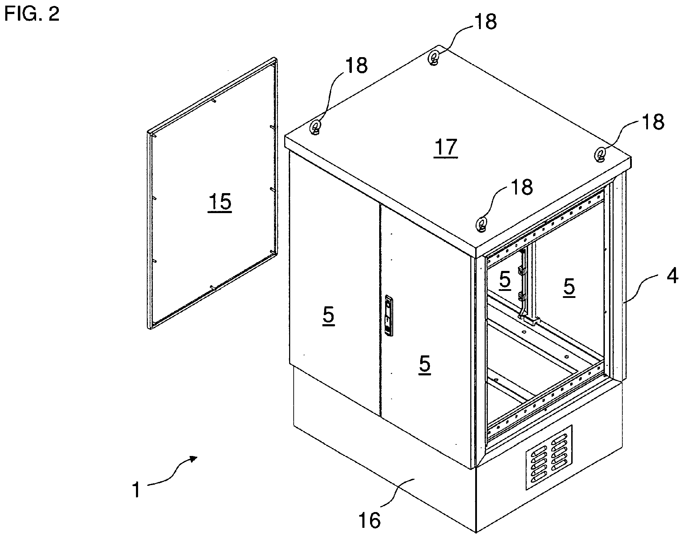

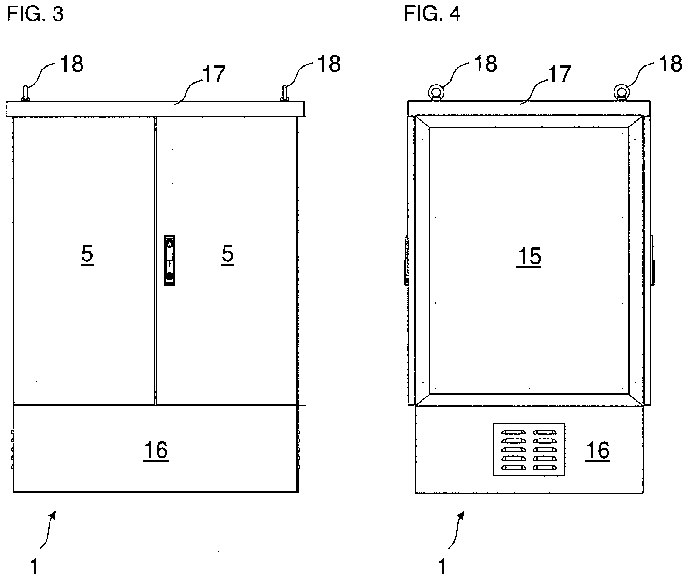

Fig. 2 stellt eine perspektivische Ansicht des Gehäuses 4 der mobilen Energieversorgungseinheit 1 aus Fig. 1 dar, Fig. 3 eine Vorderansicht des Gehäuses 4 und Fig. 4 eine Seitenansicht des Gehäuses 4.

In Fig. 2 ist das Gehäuse 4 ohne eine vordere Seitenwand 15 dargestellt, die hintere Seitenwand 15 des Gehäuses 4 ist nach hinten zum Gehäuse 4 beabstandet dargestellt. Das Gehäuse 4 weist einen Sockel 16 und ein Dach 17 auf. Am Dach 17 des Gehäuses 4 sind insgesamt vier Transportvorrichtungen 18 in Form von Transportösen abnehmbar angebracht.

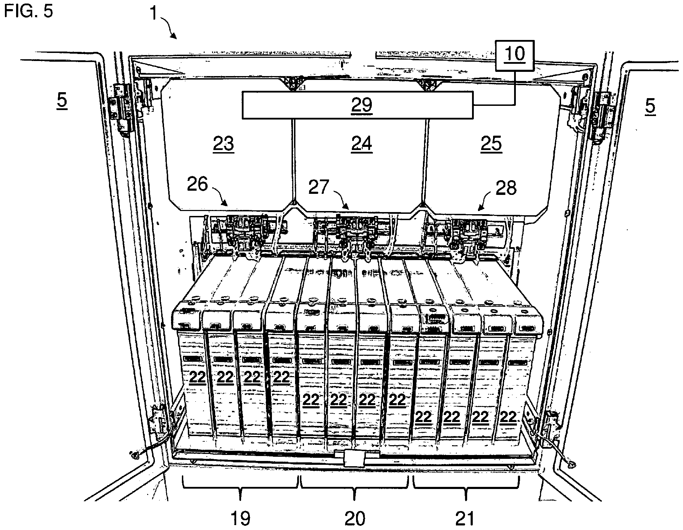

Fig. 5 stellt eine perspektivische Ansicht des Innenraums des Gehäuses 4 aus Fig. 2 mit darin aufgenommenen Komponenten der mobilen Energieversorgungseinheit 1 aus Fig. 1 dar. Insbesondere ist in Fig. 5 zu erkennen, dass das gezeigte Ausführungsbeispiel der Energieversorgungseinheit 1 insgesamt drei Energiespeicherbänke 19, 20, 21, vorliegend eine erste Energiespeicherbank 19, eine zweite Energiespeicherbank 20 und eine dritte Energiespeicherbank 21, aufweist. Jede Energiespeicherbank 19, 20, 21 weist vier einzelne elektrische Energiespeicher 22 zur Bereitstellung elektrischer Energie auf. Die einzelnen Energiespeicher 22 sind bei dem gezeigten Ausführungsbeispiel der Energieversorgungseinheit 1 im Wesentlichen identisch aufgebaut, sowohl hinsichtlich ihrer mechanischen als auch hinsichtlich ihrer elektrischen Eigenschaften. Vorliegend sind alle Energiespeicher 22 Lithium-Ionen-Akkumulatoren, insbesondere LiFePO₄-Akkus, so dass eine Gesamtausgangsnennspannung jeder Energiespeicherbank 19, 20 bzw. 21 bei dem gezeigten Ausführungsbeispiel etwa 12 V beträgt.

Die zweite Energiespeicherbank 20 der Energieversorgungseinheit 1 stellt eine zur ersten Energiespeicherbank 19 redundante Energiespeicherbank, wie hierin bereits weiter oben im allgemeinen Teil beschrieben, dar. Das heißt, die erste und zweite Energiespeicherbank 19, 20 stellen gemeinsam die an den Ausgangsanschlüssen 6 bereitgestellte elektrische Energie für die Dauerspeisung der Verkehrsüberwachungsanlage 3 bereit. Die dritte Energiespeicherbank 21 ist bei dem gezeigten Ausführungsbeispiel der mobilen Energieversorgungseinheit 1 im Wesentlichen vorgesehen, lediglich Spitzenlasten abzudecken und wird vorliegend lediglich bedarfsweise von einer Steuereinheit 29 zusätzlich zu den beiden Energiespeicherbänken 19 und 20 zugeschaltet. Dies ist jedoch nicht zwingend erforderlich. Die dritte Energiespeicherbank 21 könnte auch als eine 2. zweite Energiespeicherbank 20 fungieren, das heißt zusammen mit der ersten Energiespeicherbank 19 und der 1. zweiten Energiespeicherbank 20 die dauerhafte elektrische Speisung (Dauerlast) der angeschlossenen Verkehrsüberwachungsanlage 3 sicherstellen.

Bei dem in Fig. 5 dargestellten Ausführungsbeispiel der Energieversorgungseinheit 1 sind die mehreren Energiespeicherbänke 19, 20, 21 einzeln auswechselbar im Gehäuse 4 aufgenommen. Ebenfalls sind vorliegend die einzelnen Energiespeicher 22 jeder Energiespeicherbank 19, 20, 21 einzeln auswechselbar in der jeweiligen Energiespeicherbank 19, 20, 21 aufgenommen.

Des Weiteren sind in Fig. 5 drei elektronische Messeinrichtungen 23, 24, 25 zu erkennen, wobei die erste Messeinrichtung 23 der ersten Energiespeicherbank 19, die zweite Messeinrichtung 24 der zweiten Energiespeicherbank 20 und die dritte Messeinrichtung 25, der dritten Energiespeicherbank 21 zugeordnet ist. Die jeweiligen Messeinrichtungen 23, 24, 25 weisen zur Erfassung von Messgrößen, zum Beispiel einzelne Zellenspannungen der einzelnen Energiespeicher 22 einer jeweiligen Energiespeicherbank 19, 20 bzw. 21, eine Gesamtspannung einer zugeordneten Energiespeicherbank 19, 20 bzw. 21, einzelne Zellenströme der einzelnen Energiespeicher 22 einer jeweiligen Energiespeicherbank 19, 20 bzw. 21, einen Gesamtstrom einer zugeordneten Energiespeicherbank 19, 20 bzw. 21, einzelne Zellentemperaturen der einzelnen Energiespeicher 22 einer jeweiligen Energiespeicherbank 19, 20 bzw. 21, ein am jeweiligen Ausgangsanschluss 6 (Fig. 1) entnommener Ausgangsstrom, eine Gehäusetemperatur innerhalb des Gehäuses 4 und dergleichen, entsprechende in Fig. 5 nicht dargestellte Messsensoren für Spannung, Strom und/oder Temperatur auf.

Es ist zu verstehen, dass bei dem vorliegend dargestellte Ausführungsbeispiel der Energieversorgungseinheit 1 die Ausgangsanschlüsse 6 gehäuseinnenseitig mit einer oder mehreren der Energiespeicherbänke 19, 20, 21 elektrisch verbindbar sind. Hierzu ist jeweils eine elektrische Schalteinrichtung 26, 27, 28, zum Beispiel FET-Transistoren, je Energiespeicherbank 19, 20, 21 zum elektrischen Verbinden und Trennen der jeweiligen Energiespeicherbank 19, 20 bzw. 21 mit bzw. von dem jeweiligen Ausgangsanschluss 6 vorgesehen. Die Steuerung der Schalteinrichtungen 26, 27, 28 wird vorliegend von der gemeinsamen elektronischen Steuereinheit 29 durchgeführt, die jeweils mit den Messeinrichtungen 23, 24, 25 sowie den Schalteinrichtungen 26, 27, 28 elektrisch verbunden ist. Die Steuereinheit 29 überwacht die von den Messeinrichtungen 23, 24, 25 erfassten Messgrößen und steuert die Schalteinrichtungen 26, 27, 28 in Abhängigkeit von diesen Messgrößen in der hierin beschriebenen Weise.

Des Weiteren ist die Steuereinheit 29 bei der vorliegenden Energieversorgungseinheit 1 in datenübertragender Weise mit der Datenübertragungseinrichtung 10 verbunden. Zusätzlich ist auch der Eingangsanschluss 12 über die Steuereinheit 29 zum bedarfsweisen Nachladen der Energiespeicherbänke 19, 20, 21 mit diesen jeweils elektrisch verbindbar.

Die vorstehend beschriebene erfindungsgemäße Anordnung einer mobilen Energieversorgungseinheit und einer Verkehrsüberwachungsanlage ist nicht auf die hierin offenbarte Ausführungsform beschränkt, sondern umfasst auch gleich wirkende weitere Ausführungsformen, die sich aus technisch sinnvollen weiteren Kombinationen der hierin beschriebenen Merkmale ergeben. Insbesondere sind die hierin vorstehend in der allgemeinen Beschreibung und der Figurenbeschreibung genannten und/oder in den Figuren alleine gezeigten Merkmale und Merkmalskombinationen nicht nur in den jeweils hierin explizit angegebenen Kombinationen, sondern auch in anderen Kombinationen oder in Alleinstellung verwendbar, ohne den Rahmen der vorliegenden Erfindung zu verlassen.

Gemäß einem weiteren Aspekt der Erfindung wird die mobile Energieversorgungseinheit zur Versorgung einer Verkehrsüberwachungsanlage, insbesondere eine digitalen Verkehrsüberwachungsanlage, mit elektrischer Energie verwendet, um einen ununterbrochenen Messbetrieb der Verkehrsüberwachungsanlage innerhalb eines vorherbestimmten Zeitraums, beispielsweise wenigstens einige Tage, bevorzugt wenigstens 7 Tage, zu gewährleisten.

### Bezugszeichenliste:

- 1: Mobile Energieversorgungseinheit
- 2: Anlagengehäuse
- 3: Verkehrsüberwachungsanlage
- 4: Gehäuse von 1
- 5: Doppelflügeltür
- 6: Ausgangsanschluss
- 7: Anschlussleitung
- 8: Hoheitlicher Teil
- 9: Nichthoheitlicher Teil
- 10: Datenübertragungseinrichtung
- 11: Datenverarbeitungsanlage
- 12: Eingangsanschluss
- 13: Gehäuseexterne Energiequelle
- 14: Erdungsanschluss
- 15: Gehäuseseitenwand .
- 16: Gehäusesockel
- 17: Gehäusedach
- 18: Transportvorrichtung/Transportöse
- 19: Erste Energiespeicherbank
- 20: Zweite Energiespeicherbank
- 21: Dritte Energiespeicherbank
- 22: Elektrischer Energiespeicher
- 23: Erste Messeinrichtung
- 24: Zweite Messeinrichtung
- 25: Dritte Messeinrichtung
- 26: Erste elektrische Schalteinrichtung
- 27: Zweite elektrische Schalteinrichtung
- 28: Dritte elektrische Schalteinrichtung
- Flash1: Erstes digitales Kamerasystem mit Blitzvorrichtung
- Flash2: Zweites digitales Kamerasystem mit Blitzvorrichtung
- Lidar1: Erster optischer Abstands- und Geschwindigkeitsmesssensor
- Lidar2: Zweiter optischer Abstands- und Geschwindigkeitsmesssensor

## Patentansprüche

1. Anordnung aus einer mobilen Energieversorgungseinheit (1) und einer in einem Anlagengehäuse (2) aufgenommenen Verkehrsüberwachungsanlage (3), wobei die Energieversorgungseinheit (1) ein Gehäuse (4), wenigstens eine in dem Gehäuse (4) aufgenommene Energiespeicherbank (19, 20, 21) mit zumindest einem elektrischen Energiespeicher (22) zur Bereitstellung elektrischer Energie und wenigstens einen aus dem Gehäuse (4) herausgeführten elektrischen Ausgangsanschluss (6) aufweist, wobei der Ausgangsanschluss (6) gehäuseinnenseitig mit der wenigstens einen Energiespeicherbank (19, 20, 21) zur Bereitstellung der elektrischen Energie elektrisch verbindbar ist und an den gehäuseaußenseitig die Verkehrsüberwachungsanlage (3) zu ihrer elektrischen Energieversorgung elektrisch anschließbar ist, wobei die Verkehrsüberwachungsanlage (3) mit dem wenigstens einen Ausgangsanschluss (6) der Energieversorgungseinheit (1) elektrisch verbunden ist, wobei die Energieversorgungseinheit (1) wenigstens eine elektronische Messeinrichtung (23, 24, 25) mit zumindest einem Spannungssensor und/oder zumindest einem Stromsensor und/oder zumindest einem Temperatursensor zur Erfassung einer entsprechenden Messgröße der wenigstens einen Energiespeicherbank (19, 20, 21) und/oder des wenigstens einen Energiespeichers (22) und/oder des wenigstens einen Ausgangsanschlusses (6) und/oder des Gehäuses (4) aufweist, wobei die Energieversorgungseinheit (1) weiterhin wenigstens eine elektrische Schalteinrichtung (26, 27, 28) zum elektrischen Verbinden und Trennen der wenigstens einen Energiespeicherbank (19, 20, 21) mit bzw. von dem wenigstens einen Ausgangsanschluss (6) und wenigstens eine mit der Messeinrichtung (23, 24, 25) und der Schalteinrichtung (26, 27, 28) jeweils elektrisch verbundene elektronische Steuereinheit (29) aufweist, die eingerichtet ist, die von der wenigstens einen Messeinrichtung (23, 24, 25) erfasste/n Messgröße/n zu überwachen und die Schalteinrichtung (26, 27, 28) in Abhängigkeit von der/den durch die wenigstens eine Messeinrichtung (23, 24, 25) erfassten Messgröße/n zu steuern, wobei die Energieversorgungseinheit (1) eingerichtet ist, die Verkehrsüberwachungsanlage (3) für einen innerhalb eines vorherbestimmten Zeitraums ununterbrochenen Messbetrieb mit elektrischer Energie zu versorgen, wobei wenigstens eine weitere Energiespeicherbank (20, 21) mit zumindest einem weiteren elektrischen Energiespeicher (22) zur Bereitstellung elektrischer Energie in dem Gehäuse (4) aufgenommen ist und die mehreren Energiespeicherbänke (19, 20, 21) einzeln auswechselbar in dem Gehäuse (4) aufgenommen sind und/oder mehrere Energiespeicher (22) aufweisen, die einzeln auswechselbar in der jeweiligen Energiespeicherbank (19, 20, 21) aufgenommen sind, wobei die mehreren Energiespeicherbänke (19, 20) derart elektrisch verschaltet sind, dass eine am Ausgangsanschluss (6) bereitgestellte elektrische Gesamtenergie aus der Summe von Teilenergiebeiträgen jeder einzelnen Energiespeicherbank (19, 20) zusammengesetzt ist, so dass die Bereitstellung elektrischer Energie am elektrischen Ausgangsanschluss (6) für den Messbetrieb der am Ausgangsanschluss (6) angeschlossenen Verkehrsüberwachungsanlage (3) bei einem Wechsel einer der mehreren Energiespeicherbänke (19, 20, 21) beziehungsweise des wenigstens einen Energiespeichers (22) der jeweiligen Energiespeicherbank (19, 20, 21) ununterbrochen erfolgt,
**dadurch gekennzeichnet, dass**
das Gehäuse (4) außerhalb des und räumlich getrennt von dem Anlagengehäuse (2) angeordnet ist.

2. Anordnung nach dem vorhergehenden Anspruch,
**dadurch gekennzeichnet, dass**
die Verkehrsüberwachungsanlage (3) eine digitale Verkehrsüberwachungsanlage ist.

3. Anordnung nach einem der vorhergehenden Ansprüche,
**dadurch gekennzeichnet, dass**
wenigstens eine noch weitere Energiespeicherbank (21) mit zumindest einem elektrischen Energiespeicher (22) zur Bereitstellung elektrischer Energie in dem Gehäuse (4) aufgenommen ist, wobei die noch weitere Energiespeicherbank (21) lediglich zur Abdeckung von kurzzeitigen Spitzenlasten am wenigstens einen Ausgangsanschluss (6) elektrische Energie bereitstellt.

4. Anordnung nach einem der vorhergehenden Ansprüche,
**dadurch gekennzeichnet, dass**
die mehreren Energiespeicherbänke (19, 20, 21) dieselbe Anzahl elektrischer Energiespeicher (22) aufweisen.

5. Anordnung nach einem der vorhergehenden Ansprüche,
**dadurch gekennzeichnet, dass**
ein Wechselrichter elektrisch zwischen die wenigstens eine Energiespeicherbank (19, 20, 21) und den wenigstens einen Ausgangsanschluss (6) geschaltet ist, wobei der Wechselrichter eine von der Energiespeicherbank (19, 20, 21) bereitgestellte elektrische Gleichspannung in eine am Ausgangsanschluss (6) bereitgestellte elektrische Wechselspannung wandelt.

6. Anordnung nach einem der vorhergehenden Ansprüche,
**dadurch gekennzeichnet, dass**
wenigstens ein aus dem Gehäuse (4) herausgeführter elektrischer Eingangsanschluss (12) vorgesehen ist, an den eine gehäuseexterne elektrische Energiequelle (13) elektrisch anschließbar ist und der eingerichtet ist, gehäuseinnenseitig mit der wenigstens einen Energiespeicherbank (19, 20, 21) elektrisch verbunden zu werden und den wenigstens einen elektrischen Energiespeicher (22) der wenigstens einen Energiespeicherbank (19, 20, 21) elektrisch zu laden.

7. Anordnung nach einem der vorhergehenden Ansprüche,
**dadurch gekennzeichnet, dass**
am Gehäuse (4) außenseitig wenigstens eine Transportvorrichtung (18) zum Transportieren des Gehäuses (4) vorgesehen ist.

8. Anordnung nach einem der vorhergehenden Ansprüche
**dadurch gekennzeichnet, dass**
das Gehäuse (4) im Wesentlichen quaderförmig ausgebildet ist und an zwei Seiten des Gehäuses (4) jeweils eine Doppelflügeltür (5) aufweist.

9. Anordnung nach einem der vorhergehenden Ansprüche,
**dadurch gekennzeichnet, dass**
die Energieversorgungseinheit (1) eine Datenübertragungseinrichtung (10) aufweist, die in datenübertragender Weise mit der Steuereinheit (29) verbunden und eingerichtet ist, Daten der Energieversorgungseinheit (1) zu übertragen.

10. Anordnung nach einem der vorhergehenden Ansprüche,
**dadurch gekennzeichnet, dass**
die wenigstens eine Energiespeicherbank (19, 20, 21) derart ausgelegt ist, eine am wenigstens einen Ausgangsanschluss (6) anschließbare Verkehrsüberwachungsanlage (3) für einen ununterbrochenen Messbetrieb in einem Zeitraum von mindestens 7 Tagen mit elektrischer Energie zu versorgen.

11. Anordnung nach einem der vorhergehenden Ansprüche,
**dadurch gekennzeichnet, dass**
der elektrische Energiespeicher (22) ein Li-Ionen-Akkumulator ist.

12. Verwendung einer mobilen Energieversorgungseinheit (1) zur Versorgung einer in einem Anlagengehäuse (2) aufgenommenen Verkehrsüberwachungsanlage (3) mit elektrischer Energie, wobei die Energieversorgungseinheit (1) ein Gehäuse (4), wenigstens eine in dem Gehäuse (4) aufgenommene Energiespeicherbank (19, 20, 21) mit zumindest einem elektrischen Energiespeicher (22) zur Bereitstellung der elektrischen Energie und wenigstens einen aus dem Gehäuse (4) herausgeführten elektrischen Ausgangsanschluss (6) aufweist, wobei der Ausgangsanschluss (6) gehäuseinnenseitig mit der wenigstens einen Energiespeicherbank (19, 20, 21) zur Bereitstellung der elektrischen Energie elektrisch verbindbar ist und an den gehäuseaußenseitig die Verkehrsüberwachungsanlage (3) zu ihrer elektrischen Energieversorgung elektrisch anschließbar ist, wobei die Verkehrsüberwachungsanlage (3) mit dem wenigstens einen Ausgangsanschluss (6) der Energieversorgungseinheit (1) elektrisch verbunden ist, wobei die Energieversorgungseinheit (1) wenigstens eine elektronische Messeinrichtung (23, 24, 25) mit zumindest einem Spannungssensor und/oder zumindest einem Stromsensor und/oder zumindest einem Temperatursensor zur Erfassung einer entsprechenden Messgröße der wenigstens einen Energiespeicherbank (19, 20, 21) und/oder des wenigstens einen Energiespeichers (22) und/oder des wenigstens einen Ausgangsanschlusses (6) und/oder des Gehäuses (4) aufweist, wobei die Energieversorgungseinheit (1) weiterhin wenigstens eine elektrische Schalteinrichtung (26, 27, 28) zum elektrischen Verbinden und Trennen der wenigstens einen Energiespeicherbank (19, 20, 21) mit bzw. von dem wenigstens einen Ausgangsanschluss (6) und wenigstens eine mit der Messeinrichtung (23, 24, 25) und der Schalteinrichtung (26, 27, 28) jeweils elektrisch verbundene elektronische Steuereinheit (29) aufweist, die eingerichtet ist, die von der wenigstens einen Messeinrichtung (23, 24, 25) erfasste/n Messgröße/n zu überwachen und die Schalteinrichtung (26, 27, 28) in Abhängigkeit von der/den durch die wenigstens eine Messeinrichtung (23, 24, 25) erfassten Messgröße/n zu steuern, wobei die Energieversorgungseinheit (1) eingerichtet ist, die Verkehrsüberwachungsanlage (3) für einen innerhalb eines vorherbestimmten Zeitraums ununterbrochenen Messbetrieb mit elektrischer Energie zu versorgen, wobei wenigstens eine weitere Energiespeicherbank (20, 21) mit zumindest einem weiteren elektrischen Energiespeicher (22) zur Bereitstellung elektrischer Energie in dem Gehäuse (4) aufgenommen ist und die mehreren Energiespeicherbänke (19, 20, 21) einzeln auswechselbar in dem Gehäuse (4) aufgenommen sind und/oder mehrere Energiespeicher (22) aufweisen, die einzeln auswechselbar in der jeweiligen Energiespeicherbank (19, 20, 21) aufgenommen sind, wobei die mehreren Energiespeicherbänke (19, 20) derart elektrisch verschaltet sind, dass eine am Ausgangsanschluss (6) bereitgestellte elektrische Gesamtenergie aus der Summe von Teilenergiebeiträgen jeder einzelnen Energiespeicherbank (19, 20) zusammengesetzt ist, so dass die Bereitstellung elektrischer Energie am elektrischen Ausgangsanschluss (6) für den Messbetrieb der am Ausgangsanschluss (6) angeschlossenen Verkehrsüberwachungsanlage (3) bei einem Wechsel einer der mehreren Energiespeicherbänke (19, 20, 21) beziehungsweise des wenigstens einen Energiespeichers (22) der jeweiligen Energiespeicherbank (19, 20, 21) ununterbrochen erfolgt,
**dadurch gekennzeichnet, dass**
das Gehäuse (4) außerhalb des und räumlich getrennt von dem Anlagengehäuse (2) angeordnet ist.

## Claims

1. Arrangement consisting of a mobile power supply unit (1) and a traffic monitoring system (3) housed in a system housing (2), , wherein the power supply unit (1) comprises a housing (4), at least one energy storage bank (19, 20, 21) housed in the housing (4) with at least one electrical energy storage device (22) for supplying electrical energy, and at least one electrical outgoing connection (6) leading out of the housing (4), wherein the outgoing connection (6) is electrically connectable on the inside of the housing to the at least one energy storage bank (19, 20, 21) for supplying the electrical energy, and to which the traffic monitoring system (3) can be electrically connected on the outside of the housing for its electrical energy supply, wherein the traffic monitoring system (3) is electrically connected to the at least one outgoing connection (6) of the power supply unit (1), wherein the power supply unit (1) has at least one electronic measuring device (23, 24, 25) with at least one voltage sensor and/or at least one current sensor and/or at least one temperature sensor for detecting a corresponding measurement quantity of the at least one energy storage bank (19, 20, 21) and/or the at least one energy storage device (22) and/or the at least one outgoing connection (6) and/or the housing (4), wherein the power supply unit (1) further comprises at least one electrical switching device (26, 27, 28) for electrically connecting and disconnecting the at least one energy storage bank (19, 20, 21) to and from the at least one outgoing connection (6), and at least one electronic control unit (29) electrically connected to the measuring device (23, 24, 25) and the switching device (26, 27, 28), which is configured to monitor the measurement quantity or quantities detected by the at least one measuring device (23, 24, 25) and to control the switching device (26, 27, 28) as a function of the measurement quantity or quantities detected by the at least one measuring device (23, 24, 25), wherein the power supply unit (1) is configured to supply the traffic monitoring system (3) with electrical power for uninterrupted measurement operation within a predetermined period of time, wherein at least one further energy storage bank (20, 21) with at least one further electrical energy storage device (22) for supplying electrical energy is accommodated in the housing (4), and the plurality of energy storage banks (19, 20, 21) are individually replaceable and accommodated in the housing (4) and/or comprise a plurality of energy storage devices (22) which are individually replaceable and accommodated in the respective energy storage bank (19, 20, 21), wherein the plurality of energy storage banks (19, 20) are electrically connected in such a way that the total electrical energy supplied at the outgoing connection (6) is composed of the sum of partial energy contributions from each individual energy storage bank (19, 20), so that the supply of electrical energy at the electrical outgoing connection (6) for the measuring operation of the traffic monitoring system (3) connected to the outgoing connection (6) is uninterrupted when one of the multiple energy storage banks (19, 20, 21) or the at least one energy storage device (22) of the respective energy storage bank (19, 20, 21) is changed,
**characterized in that**
the housing (4) is arranged outside the system housing (2) and spatially separated from it.

2. Arrangement according to the preceding claim,
**characterized in that**
the traffic monitoring system (3) is a digital traffic monitoring system.

3. Arrangement according to any one of the preceding claims,
**characterized in that**
at least one further energy storage bank (21) with at least one electrical energy storage device (22) for supplying electrical energy is accommodated in the housing (4), wherein the further energy storage bank (21) only supplies electrical energy to cover short-term peak loads at the at least one outgoing connection (6).

4. Arrangement according to any one of the preceding claims,
**characterized in that**
the plurality of energy storage banks (19, 20, 21) have the same number of electrical energy storage devices (22).

5. Arrangement according to any one of the preceding claims,
**characterized in that**
an inverter is electrically connected between the at least one energy storage bank (19, 20, 21) and the at least one outgoing connection (6), wherein the inverter converts a DC voltage supplied by the energy storage bank (19, 20, 21) into an AC voltage supplied at the outgoing connection (6).

6. Arrangement according to any one of the preceding claims,
**characterized in that**
at least one electrical incoming connection (12) is provided, which is led out of the housing (4) and to which an electrical power source (13) external to the housing can be electrically connected, and which is configured to be electrically connected to the at least one energy storage bank (19, 20, 21) on the inside of the housing and to electrically charge the at least one electrical energy storage device (22) of the at least one energy storage bank (19, 20, 21).

7. Arrangement according to any one of the preceding claims,
**characterized in that**
at least one transport device (18) for transporting the housing (4) is provided on the outside of the housing (4).

8. Arrangement according to one of the preceding claims
**characterized in that**
the housing (4) is essentially cuboidal in shape and has a double wing door (5) on each of two sides of the housing (4).

9. Arrangement according to any one of the preceding claims,
**characterized in that**
the power supply unit (1) has a data transmission device (10) which is connected to the control unit (29) in a data-transmitting manner and is designed to transmit data from the power supply unit (1).

10. Arrangement according to any one of the preceding claims,
**characterized in that**
the at least one energy storage bank (19, 20, 21) is configured to supply electrical energy to a traffic monitoring system (3) connectable to the at least one outgoing connection (6) for uninterrupted measurement operation over a period of at least 7 days.

11. Arrangement according to one of the preceding claims,
**characterized in that**
the electrical energy storage device (22) is a Li-ion accumulator.

12. Use of a mobile power supply unit (1) for supplying electrical energy to a traffic monitoring system (3) housed in a system housing (2), wherein the power supply unit (1) comprises a housing (4), at least one energy storage bank (19, 20, 21) housed in the housing (4) with at least one electrical energy storage device (22) for supplying the electrical energy, and at least one electrical outgoing connection (6) leading out of the housing (4), wherein the outgoing connection (6) can be electrically connected on the inside of the housing to the at least one energy storage bank (19, 20, 21) for supplying the electrical energy, and to which the traffic monitoring system (3) can be electrically connected on the outside of the housing for its electrical energy supply, wherein the traffic monitoring system (3) is electrically connected to the at least one outgoing connection (6) of the power supply unit (1), wherein the power supply unit (1) has at least one electronic measuring device (23, 24, 25) with at least one voltage sensor and/or at least one current sensor and/or at least one temperature sensor for detecting a corresponding measurement quantity of the at least one energy storage bank (19, 20, 21) and/or the at least one energy storage device (22) and/or the at least one outgoing connection (6) and/or the housing (4), wherein the power supply unit (1) further comprises at least one electrical switching device (26, 27, 28) for electrically connecting and disconnecting the at least one energy storage bank (19, 20, 21) to and from the at least one outgoing connection (6), and at least one electronic control unit (29) electrically connected to the measuring device (23, 24, 25) and the switching device (26, 27, 28), which is configured to monitor the measurement quantity or quantities detected by the at least one measuring device (23, 24, 25) and to control the switching device (26, 27, 28) as a function of the measurement quantity or quantities detected by the at least one measuring device (23, 24, 25), wherein the power supply unit (1) is designed to supply the traffic monitoring system (3) with electrical power for uninterrupted measurement operation within a predetermined period of time, wherein at least one further energy storage bank (20, 21) with at least one further electrical energy storage device (22) for supplying electrical energy is accommodated in the housing (4), and the plurality of energy storage banks (19, 20, 21) are individually replaceable and accommodated in the housing (4) and/or comprise a plurality of energy storage devices (22) which are individually replaceable and accommodated in the respective energy storage bank (19, 20, 21), wherein the plurality of energy storage banks (19, 20) are electrically connected in such a way that the total electrical energy supplied at the outgoing connection (6) is composed of the sum of partial energy contributions from each individual energy storage bank (19, 20), so that the supply of electrical energy at the electrical outgoing connection (6) for the measuring operation of the traffic monitoring system (3) connected to the outgoing connection (6) is uninterrupted when one of the multiple energy storage banks (19, 20, 21) or the at least one energy storage device (22) of the respective energy storage bank (19, 20, 21) is changed.
**characterized in that**
the housing (4) is arranged outside the system housing (2) and spatially separated from it.

## Revendications

1. Dispositif composé d'une unité d'alimentation électrique mobile (1) et d'un système de surveillance du trafic (3) logé dans un boîtier de système (2), dans lequel l'unité d'alimentation électrique (1) comprend un boîtier (4), au moins un banc de stockage d'énergie (19, 20, 21) logée dans le boîtier (4) avec au moins un dispositif de stockage d'énergie électrique (22) pour fournir de l'énergie électrique, et au moins une connexion de sortie électrique (6) sortant du boîtier (4), dans lequel la connexion de sortie (6) peut être connectée électriquement à l'intérieur du boîtier à au moins un banc de stockage d'énergie (19, 20, 21) pour fournir l'énergie électrique, et auquel le système de surveillance du trafic (3) peut être connecté électriquement à l'extérieur du boîtier pour son alimentation en énergie électrique, dans lequel le système de surveillance du trafic (3) est connecté électriquement à la au moins une connexion de sortie (6) de l'unité d'alimentation électrique (1), dans lequel l'unité d'alimentation électrique (1) comporte au moins un dispositif de mesure électronique (23, 24, 25) avec au moins un capteur de tension et/ou au moins un capteur de courant et/ou au moins un capteur de température pour détecter une quantité de mesure correspondante du ou des bancs de stockage d'énergie (19, 20, 21) et/ou du ou des dispositifs de stockage d'énergie (22) et/ou de la ou des connexions de sortie (6) et/ou du boîtier (4), dans lequel l'unité d'alimentation électrique (1) comprend en outre au moins un dispositif de commutation électrique (26, 27, 28) pour connecter et déconnecter électriquement le au moins un banc de stockage d'énergie (19, 20, 21) à et de la au moins une connexion de sortie (6), et au moins une unité de commande électronique (29) connectée électriquement au dispositif de mesure (23, 24, 25) et au dispositif de commutation (26, 27, 28), qui est configurée pour surveiller la ou les quantités de mesure détectées par le ou les dispositifs de mesure (23, 24, 25) et pour commander le dispositif de commutation (26, 27, 28) en fonction de la ou des quantités de mesure détectées par le ou les dispositifs de mesure (23, 24, 25), l'unité d'alimentation électrique (1) étant configurée pour alimenter le système de surveillance du trafic (3) en énergie électrique pour un fonctionnement ininterrompu des mesures pendant une période de temps prédéterminée, au moins un autre banc de stockage d'énergie (20, 21) avec au moins un autre dispositif de stockage d'énergie électrique (22) pour fournir de l'énergie électrique étant logé dans le boîtier (4), et les multiples bancs de stockage d'énergie (19, 20, 21) sont remplaçables individuellement et logés dans le boîtier (4) et/ou comprennent une pluralité de dispositifs de stockage d'énergie (22) qui sont remplaçables individuellement et logés dans le banc de stockage d'énergie respectif (19, 20, 21), les multiples banques de stockage d'énergie (19, 20) étant connectées électriquement de telle sorte que l'énergie électrique totale fournie au niveau de la connexion de sortie (6) soit composée de la somme des contributions énergétiques partielles de chaque banque de stockage d'énergie individuelle (19, 20), de sorte que l'alimentation en énergie électrique au niveau de la connexion électrique de sortie (6) pour le fonctionnement de mesure du système de surveillance du trafic (3) connecté à la connexion de sortie (6) est ininterrompue lorsqu'un des multiples bancs de stockage d'énergie (19, 20, 21) ou le au moins un dispositif de stockage d'énergie (22) du banc de stockage d'énergie respectif (19, 20, 21) est changé,
**caractérisé en ce que**
le boîtier (4) est disposé à l'extérieur du boîtier du système (2) et séparé spatialement de celui-ci.

2. Dispositif selon la revendication précédente,
**caractérisé en ce que**
le système de surveillance du trafic (3) est un système de surveillance du trafic numérique.

3. Dispositif selon l'une quelconque des revendications précédentes,
**caractérisé en ce que**
au moins un autre banc de stockage d'énergie (21) avec au moins un dispositif de stockage d'énergie électrique (22) pour fournir de l'énergie électrique est logé dans le boîtier (4), le banc de stockage d'énergie supplémentaire (21) ne fournissant de l'énergie électrique que pour couvrir les pics de charge à court terme au niveau de la au moins une connexion de sortie (6).

4. Dispositif selon l'une quelconque des revendications précédentes,
**caractérisé en ce que**
les multiples bancs de stockage d'énergie (19, 20, 21) ont le même nombre de dispositifs de stockage d'énergie électrique (22).

5. Dispositif selon l'une quelconque des revendications précédentes,
**caractérisé en ce qu'**
un onduleur est connecté électriquement entre le au moins un banc de stockage d'énergie (19, 20, 21) et la au moins une connexion de sortie (6), dans lequel l'onduleur convertit une tension continue fournie par le banc de stockage d'énergie (19, 20, 21) en une tension alternative fournie à la connexion de sortie (6).

6. Dispositif selon l'une quelconque des revendications précédentes,
**caractérisé en ce qu'**
au moins une connexion électrique d'entrée (12) est prévue, qui est sortie du boîtier (4) et à laquelle une source d'énergie électrique (13) externe au boîtier peut être connectée électriquement, et qui est configurée pour être connectée électriquement à au moins un banc de stockage d'énergie (19, 20, 21) à l'intérieur du boîtier et pour charger électriquement le au moins un dispositif de stockage d'énergie électrique (22) du au moins un banc de stockage d'énergie (19, 20, 21).

7. Dispositif selon l'une quelconque des revendications précédentes,
**caractérisé en ce qu'**
au moins un dispositif de transport (18) pour transporter le boîtier (4) est prévu à l'extérieur du boîtier (4).

8. Dispositif selon l'une quelconque des revendications précédentes
**caractérisé en ce que**
le boîtier (4) a une forme essentiellement cubique et comporte une porte à double battant (5) sur chacun des deux côtés du boîtier (4).

9. Dispositif selon l'une quelconque des revendications précédentes,
**caractérisé en ce que**
l'unité d'alimentation électrique (1) comporte un dispositif de transmission de données (10) qui est connecté à l'unité de commande (29) de manière à transmettre des données et qui est conçu pour transmettre des données provenant de l'unité d'alimentation électrique (1).

10. Dispositif selon l'une quelconque des revendications précédentes,
**caractérisé en ce que**
le ou les bancs de stockage d'énergie (19, 20, 21) sont configurés pour fournir de l'énergie électrique à un système de surveillance du trafic (3) pouvant être connecté à la ou aux connexions sortantes (6) pour un fonctionnement ininterrompu pendant une période d'au moins 7 jours.

11. Dispositif selon l'une quelconque des revendications précédentes,
**caractérisé en ce que**
le dispositif de stockage d'énergie électrique (22) est un accumulateur Li-ion.

12. Utilisation d'une unité d'alimentation électrique mobile (1) pour fournir de l'énergie électrique à un système de surveillance du trafic (3) logé dans un boîtier de système (2), dans laquelle l'unité d'alimentation électrique (1) comprend un boîtier (4), au moins un banc de stockage d'énergie (19, 20, 21) logée dans le boîtier (4) avec au moins un dispositif de stockage d'énergie électrique (22) pour fournir l'énergie électrique, et au moins une connexion de sortie électrique (6) sortant du boîtier (4), dans lequel la connexion de sortie (6) peut être connectée électriquement à l'intérieur du boîtier à la au moins une banque de stockage d'énergie (19, 20, 21) logé dans le boîtier (4) avec au moins un dispositif de stockage d'énergie électrique (22) pour fournir l'énergie électrique, et auquel le système de surveillance du trafic (3) peut être connecté électriquement à l'extérieur du boîtier pour son alimentation en énergie électrique, dans lequel le système de surveillance du trafic (3) est connecté électriquement à la au moins une connexion de sortie (6) de l'unité d'alimentation électrique (1), dans lequel l'unité d'alimentation électrique (1) comporte au moins un dispositif de mesure électronique (23, 24, 25) avec au moins un capteur de tension et/ou au moins un capteur de courant et/ou au moins un capteur de température pour détecter une quantité de mesure correspondante du ou des bancs de stockage d'énergie (19, 20, 21) et/ou du ou des dispositifs de stockage d'énergie (22) et/ou de la ou des connexions de sortie (6) et/ou du boîtier (4), dans lequel l'unité d'alimentation électrique (1) comprend en outre au moins un dispositif de commutation électrique (26, 27, 28) pour connecter et déconnecter électriquement le au moins un banc de stockage d'énergie (19, 20, 21) à et de la au moins une connexion de sortie (6), et au moins une unité de commande électronique (29) connectée électriquement au dispositif de mesure (23, 24, 25) et au dispositif de commutation (26, 27, 28), qui est configurée pour surveiller la ou les quantités de mesure détectées par le ou les dispositifs de mesure (23, 24, 25) et pour commander le dispositif de commutation (26, 27, 28) en fonction de la ou des quantités de mesure détectées par le ou les dispositifs de mesure (23, 24, 25), dans lequel l'unité d'alimentation électrique (1) est conçue pour alimenter le système de surveillance du trafic (3) en énergie électrique pour un fonctionnement ininterrompu des mesures pendant une période de temps prédéterminée, dans lequel au moins un autre banc de stockage d'énergie (20, 21) avec au moins un autre dispositif de stockage d'énergie électrique (22) pour fournir de l'énergie électrique est logé dans le boîtier (4), et les multiples bancs de stockage d'énergie (19, 20, 21) sont remplaçables individuellement et logés dans le boîtier (4) et/ou comprennent une pluralité de dispositifs de stockage d'énergie (22) qui sont remplaçables individuellement et logés dans le banc de stockage d'énergie respectif (19, 20, 21), les multiples banques de stockage d'énergie (19, 20) étant connectées électriquement de telle sorte que l'énergie électrique totale fournie à la connexion de sortie (6) soit composée de la somme des apports énergétiques partiels de chaque banque de stockage d'énergie individuelle (19, 20), de sorte que l'alimentation en énergie électrique au niveau de la connexion de sortie électrique (6) pour le fonctionnement de mesure du système de surveillance du trafic (3) connecté à la connexion de sortie (6) n'est pas interrompue lorsqu'un des multiples bancs de stockage d'énergie (19, 20, 21) ou le au moins un dispositif de stockage d'énergie (22) du banc de stockage d'énergie respectif (19, 20, 21) est changé.
**caractérisé en ce que**
le boîtier (4) est disposé à l'extérieur du boîtier du système (2) et séparé spatialement de celui-ci.
